# EUROPÄISCHE PATENTSCHRIFT

(11) **EP 2 133 890 B1**
(45) Veröffentlichungstag und Bekanntmachung des Hinweises auf die Patenterteilung: **24.04.2013**
(21) Anmeldenummer: 09011926.4
(22) Anmeldetag: 16.12.2005
(51) Int. Cl.: H01F 38/14, A41D 13/005

(54) **Bekleidungsstück mit induktiver Energieübertragung sowie induktive Verbindung**
Garment with inductive energy transfer and inductive coupling
Vêtement avec transfert d'énergie par induction et couplage inductif

(30) Priorität: 18.02.2005 DE 102005007598
(43) Veröffentlichungstag der Anmeldung: 16.12.2009
(62) Teilanmeldung aus: 05027605.4
(73) Patentinhaber: Fraunhofer-Gesellschaft zur Förderung der angewandten Forschung e.V., 80686 München (DE); Friedrich-Alexander-Universität Erlangen-Nürnberg, 91054 Erlangen (DE)
(72) Erfinder: Ryssel, Heiner, 91080 Spardorf (DE); März, Martin, 90941 Nürnberg (DE)

(56) Entgegenhaltungen:
- WO-A-2005/015583
- WO-A-2005/055390
- WO-A-2006/037507
- WO-A1-02/091399
- DE-A1- 3 720 164
- DE-A1- 10 220 450
- DE-A1- 10 319 532
- DE-A1- 19 806 366
- DE-A1- 19 835 984
- US-A- 5 008 517
- US-A1- 2002 102 884
- US-A1- 2002 154 518
- ANONYMOUS: 'Nomenklatura', [Online] 21 Juni 2011, Internet Gefunden im Internet: <URL:http://www.natoexhibition.org/cs/nomen klatura.html> [gefunden am 2011-10-20]

## Beschreibung

Die Anmeldung betrifft ein Bekleidungsstück mit mindestens einer Vorrichtung zum Herstellen und Lösen elektrischer Verbindungen, in welches ein elektrischer Energiespeicher integrierbar ist und welches mindestens ein elektrisch beheizbares Element enthält, wobei diese Komponenten mit elektrischen Leitungen miteinander verbunden sind. Solche Bekleidungsstücke werden eingesetzt, um unter Einsatz bei niedrigen Temperaturen und/oder weiterer Abkühlung durch Wind mittels einer elektrischen Zusatzheizung eine für den Anwender komfortable Innentemperatur zu erreichen. Die erfindungsgemäßen Kleidungsstücke umfassen Oberbekleidung, insbesondere Wetterschutzkleidung wie Mäntel, Anoraks und Hosen aber auch Handschuhe, Schuhe und Mützen.

Trotz großer Fortschritte bei Materialien und Produktgestaltung erreichen moderne Bekleidungsgegenstände unter extremen Einsatzbedingungen sehr schnell die Grenzen ihrer Wärmeisolationsfähigkeit. Besonders empfindlich sind hierbei die Extremitäten, wie beispielsweise Hände oder Füße, welche nur ein geringes Körpervolumen, jedoch eine große Oberfläche aufweisen. Dadurch wird gerade an diesen Stellen wenig Eigenwärme produziert. Gleichzeitig ist aber gerade an den Händen bei vielen Anwendungen eine hohe Beweglichkeit erfordert, beispielsweise bei der Ausübung bestimmter Sportarten oder bei Arbeitseinsätzen. Dadurch verringert sich bei Handschuhen die mögliche Isolationsschichtdicke. Insbesondere in Verbindung mit einer erhöhten Wärmeableitung, beispielsweise durch Fahrtwind oder durch die Umgebung, ist ohne Zusatzwärmequelle keine für den Anwender komfortable Innentemperatur zu erreichen.

So offenbart die DE 199 40 798 A1 ein flächiges Heizelement, welches in Textilien integriert werden kann. Dieses Heizelement kann von einer externen Spannungsquelle, beispielsweise aus dem Bordnetz eines Fahrzeuges, oder von einem Akkumulator mit Strom versorgt werden. Nachteilig an diesem Heizelement ist sein großflächiger Aufbau, welcher in feingliedrigen Bekleidungsstücken, wie beispielsweise Handschuhen, nicht einsetzbar ist.

Aus US 5,008,517 sind über vorzugsweise konventionelle elektrische Kabelsteckverbinder miteinander elektrisch verbundene Kleidungsstücke bekannt, die ihrerseits Heizelemente enthalten und durch eine zentrale externe Stromversorgung mit elektrischer Energie versorgt werden.

Aus der DE 103 42 787 A1 sind elektrisch leitfähige Garne bekannt, welche zumindest einen elastischen Kernfaden, zumindest einen, um den Kernfaden gewundenen elektrisch leitfähigen Faden und zumindest einen, um den Kernfaden gewundenen, elektrisch nicht leitenden Umwindefaden umfassen. Die Dehnbarkeit des gesamten elektrisch leitfähigen Garns wird durch den Umwindefaden begrenzt. Ein solches elektrisch leitfähiges Garn kann unmittelbar in die zu beheizenden Kleidungsstücke eingewebt werden. Somit können auch sehr kleine Flächen beheizt werden, beispielsweise einzelne Finger von Fingerhandschuhen.

Sofern der Einsatz unabhängig vom Bordnetz eines Fahr- oder Flugzeuges erfolgen soll, muss in die zu beheizenden Kleidungsstücke ein elektrischer Energiespeicher integriert werden.

Als elektrische Energiespeicher zur Beheizung von Bekleidungsstücken stehen Primärzellen, Akkumulatoren und Kondensatoren zur Verfügung. Dabei sind moderne Akkumulatoren über 1000 mal, Kondensatoren nahezu beliebig oft wiederaufladbar. Hochentwickelte Lithium-Ionen-Akkumulatoren erreichen dabei Energiedichten über 150 Wh/kg.

Jedoch ist die individuelle Ausrüstung jedes einzelnen zu beheizenden Bekleidungsgegenstandes mit einem eigenen elektrischen Energiespeicher nicht praktikabel. So sind beispielsweise sperrige Akkumulatoren an Handschuhen unerwünscht. Ebenso würde der Anwender nicht akzeptieren, täglich diverse Akkumulatoren aus Schuhen, Handschuhen und Mützen zum Wiederaufladen der Energiespeicher auszubauen oder alle seine Bekleidungsgegenstände über eine Vielzahl von Steckverbindungen mit einem speziellen Ladegerät zu verbinden.

Zusätzlich zur unerfreulichen Handhabung kommt die Problematik, dass die elektrischen Lade- und/oder Laststromkontakte am Energiespeicher nicht nur gegen Feuchtigkeit und Verschmutzung geschützt, sondern auch so gestaltet sein müssen, dass sie mehrere hundert Trenn- und Verbindungszyklen überstehen. Die gleichen Anforderungen bezüglich Robustheit gegen Feuchtigkeit und Verschmutzung müssten auch die an jedem zu beheizenden Bekleidungsgegenstand anzubringenden Bedienelemente für das Ein-/Ausschalten der Heizung oder die Heizleistungseinstellung erfüllen. Diese Problematik besteht in gleicher Weise bei Einsatz einer externen Spannungsversorgung. Aus diesen Gründen sind beheizte Kleidungsstücke bisher weder bei Herstellern, noch bei Kunden auf große Akzeptanz gestoßen.

Der Erfindung liegt demnach die Aufgabe zugrunde, eine Vorrichtung zur Energieübertragung von mindestens einer elektrischen Energiequelle auf einzeln zu beheizende Bekleidungsgegenstände anzugeben. Der Erfindung liegt weiterhin die Aufgabe zugrunde, eine komfortable Ladetechnik für bekleidungsintegrierte Energiespeicher bereitzustellen. Hierbei sollen die Nachteile nach dem Stand der Technik vermieden werden, insbesondere elektrische Kabelsteckverbindungen mit ihren Problemen im Hinblick auf Feuchtigkeits- und Verschmutzungseinflüsse. Weiterhin soll eine Lösung aufgezeigt werden, die auf aus der Bekleidungsfertigung vertrauten, einfach und sicher zu handhabenden Techniken basiert.

Die Aufgabe wird erfindungsgemäß durch ein Bekleidungsstück nach Anspruch 1 gelöst. Vorteilhafte Ausgestaltungen dieses Bekleidungsstückes schließen sich in den Unteransprüchen an.

Das Bekleidungsstück weist mindestens eine Vorrichtung zum Herstellen und Lösen elektrischer Verbindungen auf. In das Bekleidungsstück ist ein elektrischer Energiespeicher integriert und es enthält mindestens ein elektrisch beheizbares Element, sowie elektrische Leitungen zur Verbindung des elektrischen Energiespeichers, der elektrisch beheizbaren Elemente und der Vorrichtung zum Herstellen und Lösen elektrischer Verbindungen. Die mindestens eine Vorrichtung zum Herstellen und Lösen elektrischer Verbindungen ermöglicht eine induktive Übertragung elektrischer Energie. Weiterhin besteht die Lösung in einer Vorrichtung zum Herstellen und Lösen elektrischer Verbindungen, welche eine induktive

Übertragung elektrischer Energie ermöglicht und aus mindestens einem Sender und mindestens einem Empfänger besteht, wobei zwischen dem Sender und dem Empfänger eine Verriegelungsvorrichtung vorgesehen ist welche eine mechanische Kraftübertragung in allen Raumrichtungen ermöglicht.

Erfindungsgemäß wurde erkannt, dass die Problematik beheizter Kleidungsstücke dadurch gelöst werden kann, dass die zur Beheizung notwendige elektrische Energie aus mindestens einem zentralen Energiespeicher bereitgestellt wird. Die nach dem Stand der Technik bestehende Kontaktproblematik elektrischer Steckverbindungen kann erfindungsgemäß durch eine induktive Energieübertragung umgangen werden. Die eigentliche Beheizung und Stromleitung zwischen den Kontaktelementen, dem Energiespeicher und den Heizelementen erfolgt dann in an sich bekannter Weise durch elektrisch leitfähige Garne oder Flächenheizelemente.

Ein erfindungsgemäßes Bekleidungsstück ist demnach ein kleidungsstück mit einem elektrischen Heizelement und einem induktiven Leistungsempfänger und ein Kleidungsstück mit einem Energiespeicher und mindestens einem Leistungssender.

Die Vorrichtung zur induktiven Übertragung elektrischer Energie umfasst dabei auch ein Verriegelungselement, welches eine mechanische Kraftübertragung in allen Raumrichtungen ermöglicht. Somit dient der erfindungsgemäße Leistungssender gleichzeitig als Verschlusselement. Die notwendige Schließkraft wird dabei entweder mechanisch nach Art eines Druckknopfes oder Klettverschlusses erzeugt.

Da der Leistungssender mit einem mechanischen Verschlusselement ausgestattet ist, profitiert der Benutzer von der ihm bekannten Handhabung eines Druckknopfes. Ohne weiteren Aufwand wird so beim Zusammenknöpfen neben der mechanischen auch eine elektrische Verbindung hergestellt.

Besonders vorteilhaft wird in einer Ausgestaltung der Erfindung ein Lithium-Polymerakkumulator als elektrischer Energiespeicher eingesetzt. Solche Akkumulatoren können sehr flach und obendrein flexibel ausgeführt werden, so dass sie bei Integration in ein Bekleidungsstück den Tragekomfort nicht beeinträchtigen. Sofern ein solcher Akkumulator mit einer wasch- bzw. reinigungsfesten Umhüllung versehen ist, erübrigt sich auch ein Ausbau des Energiespeichers beim Waschen oder Reinigen des Kleidungsstückes.

Besonders vorteilhaft wird der Energiespeicher nicht in einer Außentasche, sondern an der Innenseite der Bekleidungsstücke angeordnet. Einerseits erwärmt somit der Träger den Energiespeicher, so dass ein kältebedingter Leistungsabfall nicht auftritt. Andererseits wird der Energiespeicher durch die Platzierung innerhalb der Jackenisolation vor Nässe und Verschmutzung geschützt. Weiterhin kann auf diese Weise auch die im Akkumulator und in der Elektronik entstehende Verlustleistung zur Erwärmung des Benutzers genutzt werden. Somit wird die gespeicherte elektrische Energie nahezu vollständig in Nutzwärme umgewandelt.

In vorteilhafter Weise kann die erfindungsgemäße Bekleidung durch eine Steuer- und/oder Regeleinrichtung ergänzt werden. Somit kann durch eine präzise Regelung der Temperatur und/oder der Heizleistung die nur begrenzt zur Verfügung stehende Energie besonders effizient eingesetzt werden. Der Sollwert kann beispielsweise berührungslos über einen Transponder-Chip, eine Sensorfläche oder einen oder mehrere Folientaster vorgegeben werden. Zur Überwachung und Regelung eignet sich dann der elektrische Widerstand des Heizelementes und/oder lokale Temperatursensoren.

In anspruchsvolleren Anwendungen kann es gewünscht oder erforderlich sein, nicht die Heizleistung zu regeln, sondern individuell die Temperatur in jedem erfindungsgemäß beheizten Bekleidungsteil. Dies ist mit den erfindungsgemäßen Energiekopplern auf verschiedene Weise möglich. Beispielsweise kann als Heizelement ein Element mit sehr stark positivem oder negativem Temperaturkoeffizienten eingesetzt werden, abhängig davon, ob die Übertragungsstrecke aus Leistungssender und

Leistungsempfänger Strom- oder Spannungsquellencharakteristik aufweist. Auch ohne Nachregelung stellt sich dann näherungsweise eine definierte Temperatur des Heizelements ein.

Alternativ kann der Leistungssender die temperaturanhängige Impedanz des Heizelements auswerten, und die Heizleistung, z.B. durch Pulsweitenmodulation (PWM), auf den gewünschten Temperatur-Sollwert regeln.

Für eine präzisere Temperaturregelung ist eine Temperaturmessung am gewünschten Ort erforderlich. Dazu muss entweder der Temperatur-Istwert von der Empfängerseite (=Heizelementseite) auf die Senderseite übertragen werden oder der Temperatur-Sollwert direkt auf den Leistungsempfänger.

Die Vorgabe individueller Temperatur-Sollwerte ist beispielsweise über Folientasten oder Transponder in jedem Leistungsempfänger möglich.

Weiterhin besteht die Möglichkeit, auch eine Einrichtung zur schnellen und effizienten Ladung eines integrierten Energiespeichers in die Steuer- und/oder Regeleinrichtung zu integrieren.

Eine vorteilhafte Möglichkeit zur Anordnung der Steuer- und/oder Regeleinrichtung stellt die Integration in den elektrischen Energiespeicher und/oder die Vorrichtung zum Herstellen und Lösen elektrischer Verbindungen dar.

Insbesondere bei dezentraler Anordnung an den jeweiligen Leistungssendern kann eine präzise Regelung der jeweils angeschlossenen Heizelemente erfolgen. Ebenfalls kann an dieser Stelle in einfacher Weise eine Einrichtung zur Lasterkennung vorgesehen werden. Mittels einer solchen Einrichtung kann Heizenergie eingespart werden, in dem nur solche Leistungssender mit elektrischer Energie versorgt werden, welche auch mit einem Heizelement verbunden sind. Es ist aber zur Energieeinsparung auch möglich, nur die Leistungsendstufe abzuschalten und die Spannungsversorgung an den Leistungssendern im übrigen unverändert zu lassen. Somit ist der betreffende Leistungssender nicht aktiv, d.h. er erzeugt kein magnetisches Wechselfeld. Zur Lasterkennung eignet sich beispielweise eine Vorrichtung zur Bestimmung der Trafo-Impedanz und/oder ein Magnetfeldsensor, beispielsweise ein auf dem Hall- oder GMR-Effekt basierender Sensor und/oder ein Reed-Kontakt.

Eine gemeinsame Leistungsregelung aller angeschlossenen Heizelemente kann in einfacher Weise über eine variable Gleichspannung erfolgen, welche von einem DC/DC-Wandler erzeugt wird. Auf diese Weise kann der Aufwand für die erforderliche Elektronik minimiert werden. Somit ist ein zuverlässiger Betrieb und eine kostengünstige Herstellung im Massenmarkt gewährleistet.

Besonders vorteilhaft wird die Zentralelektronik mit dem DC/DC-Wandler und dem Energiespeicher zu einer Einheit integriert. Ein solcher Energiespeicher mit integriertem Spannungswandler ist mit folgenden Merkmalen beispielsweise in der WO 03/015237 beschrieben: aufweisend eine Speicherzelle mit einem Leistungsausgang zum Speichern von Energie; einem Spannungswandler mit einem Leistungseingang, der mit dem Leistungsausgang der Speicherzelle verbunden ist, und mit einem Leistungsausgang, zum Wandeln einer Ausgangsspannung (Vcn) der Speicherzelle in eine vorbestimmte Spannung (Vo); einem Leistungsanschluß, der mit dem Leistungsausgang des Spannungswandlers verbunden ist; und einem Gehäuse, innerhalb dessen die Speicherzelle und der Spannungswandler angeordnet sind, an dem der Leistungsanschluß angeordnet ist, und das ausgebildet ist, um in ein Fach eines Geräts eingesetzt zu werden, wobei der Leistungsanschluß für ein Verbinden mit einem Leistungseingang des Geräts ausgebildet ist, um elektrische Leistung an das Gerät zu übertragen.

Eine Erweiterung der dort beschriebenen Schaltung um spezifische Funktionen, wie z.B. die erwähnte Programmierbarkeit durch Transponder oder eine Regelung, ist dem Fachmann geläufig. Die mögliche flache Bauform kommt der Anwendung in Bekleidungsgegenständen sehr entgegen.

Alternativ zu einer variablen Versorgungsspannung ist auch eine Steuerung und/oder Regelung der Heizleistung an jedem Sender möglich. In einer erfindungsgemäßen Ausführungsform ist zur Sollwertvorgabe jeder Sender mit einem Transponder-Chip, einer Sensorfläche oder mit Folientasten ausgestattet.

Besonders vorteilhaft erfolgt die Programmierung aller Sender jedoch zentral, z.B. über einen Transponder-Chip, über eine Sensorfläche oder über Folientasten in bzw. auf der Zentralelektronik oder in bzw. auf einem beliebigen anderen Teil des Bekleidungsgegenstands. Die individuelle Sollwertvorgabe an die Sender kann in diesem Fall digital codiert erfolgen. Dabei ist eine individuelle Adressierung jedes einzelnen Senders möglich. Methoden hierzu sind z.B. eine Codierung in ein der Versorgungsspannung auf den Leitungen 5 überlagertes digitales oder analoges Signal. Bei Einsatz einer Wechselspannung kann auch eine Codierung in das Pulsmuster dieser Spannung erfolgen.

Erfindungsgemäß ist auch die Übertragung eines Steuer- und/oder Regelsignals, z.B. eine Sollwertvorgabe, vom Leistungssender auf den -empfänger möglich. Methoden dazu sind beispielsweise eine Codierung in das Pulsmuster des Leistungssenders, magnetisch entkoppelte Übertragungskanäle, kapazitive oder optische Kopplung, oder der Einsatz eines überlagerten hochfrequenten Trägersignals. Auf dieser Weise kann jeder Sender die Heizleistung auf seinen individuellen Sollwert regeln, z.B. durch Pulsweitenmodulation.

Für die Übertragung eines Temperatur-Istwerts auf dem umgekehrten Weg vom Leistungsempfänger zum Leistungssender eignen sich alle bekannten Methoden wie z.B. magnetisch entkoppelte Übertragungskanäle, kapazitive oder optische Kopplung, Einsatz eines überlagerten hochfrequenten Trägersignals, sekundärseitige Verstimmung von Resonanzelementen, gezielte Änderung der Belastung oder Änderung der Trafo-Eigenschaften (z.B. Induktivität, Sättigung).

Vorteilhaft wird in den Bekleidungsstücken, welche einen elektrischen Energiespeicher umfassen, eine weitere induktive Vorrichtung zur Übertragung elektrischer Energie vorgesehen, welche dem Laden des Energiespeichers dient. Auf diese Weise kann der Energiespeicher durch entsprechend ausgerüstete Kleiderhaken oder Kleiderbügel geladen werden. Alternativ kann der Energiespeicher auch während des Tragens der Bekleidung aus dem Bordnetz eines Fahrzeugs geladen werden, wenn ein entsprechender Leistungssender im Sitz oder in der Kopfstütze integriert ist. Selbstverständlich ist so auch der Betrieb der Heizeinrichtung ohne eingebauten Energiespeicher möglich.

Ein Ausbau des Energiespeichers und die damit verbundene umständliche Handhabung erübrigt sich somit. Weiterhin muss der Energiespeicher nicht mit einer fehleranfälligen elektrischen Steckverbindung ausgerüstet werden.

Ohne Beschränkung des allgemeinen Erfindungsgedankens soll die Erfindung nachfolgend anhand von Ausführungsbeispielen und Figuren näher erläutert werden.
Fig.1 zeigt eine Jacke als Beispiel einer erfindungsgemäß ausgeführten Bekleidung
Fig.2 zeigt beispielhaft einen möglichen Energiespeicher
Fig.3 zeigt ein Beispiel einer Vorrichtung zum Herstellen und Lösen elektrischer Verbindungen, welches nicht unter die beanspruchte Erfindungsfällt.
Fig.4 zeigt eine weitere erfindungsgemäß ausgeführte Bekleidung
Fig.5 zeigt eine Lademöglichkeit für ein Bekleidungsstück nach Fig.1
Fig.6 stellt ein mögliches Blockschaltbild einer erfindungsgemäß ausgeführten Bekleidung dar.

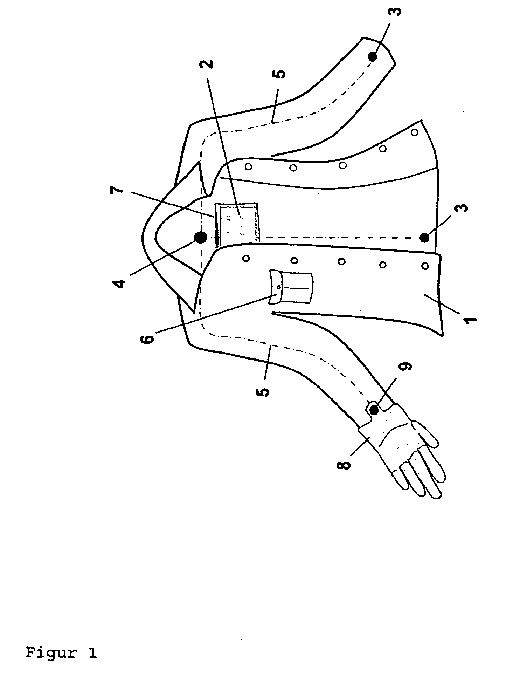

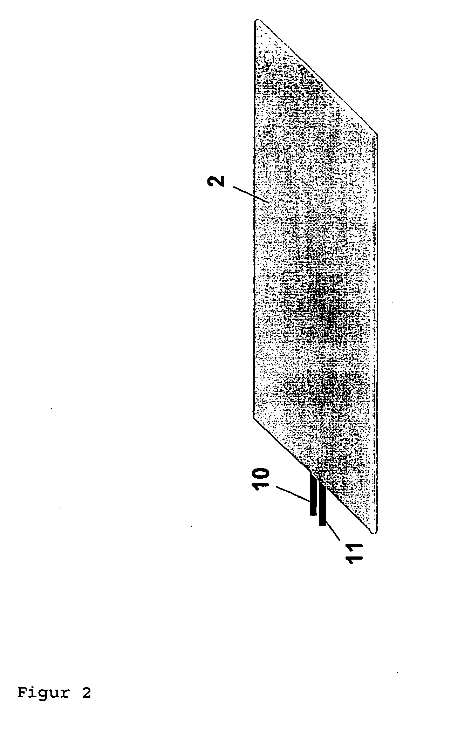

Fig.1 zeigt eine Variante einer erfindungsgemäß ausgeführten Bekleidung. Beispielhaft ist eine Jacke 1 mit einem elektrischen Energiespeicher 2, mit mindestens einem Leistungssender 3, einem Ladeadapter 4 und elektrischen Verbindungen 5 ausgestattet. Der elektrische Energiespeicher kann in einer üblichen Jackentasche 6 platziert werden. Vorteilhaft ist der Energiespeicher jedoch als Lithium-Polymerakkumulator nach Fig.2 ausgeführt und in dieser flachen und flexiblen Bauform im Schulterbereich der Jacke integriert. In diesem Fall ist der Lithium-Polymerakkumulator mit einer wasch- und reinigungsfesten Versiegelung versehen, so dass ein Ausbau des Energiespeichers beim Waschen oder Reinigen der Jacke nicht erforderlich ist.

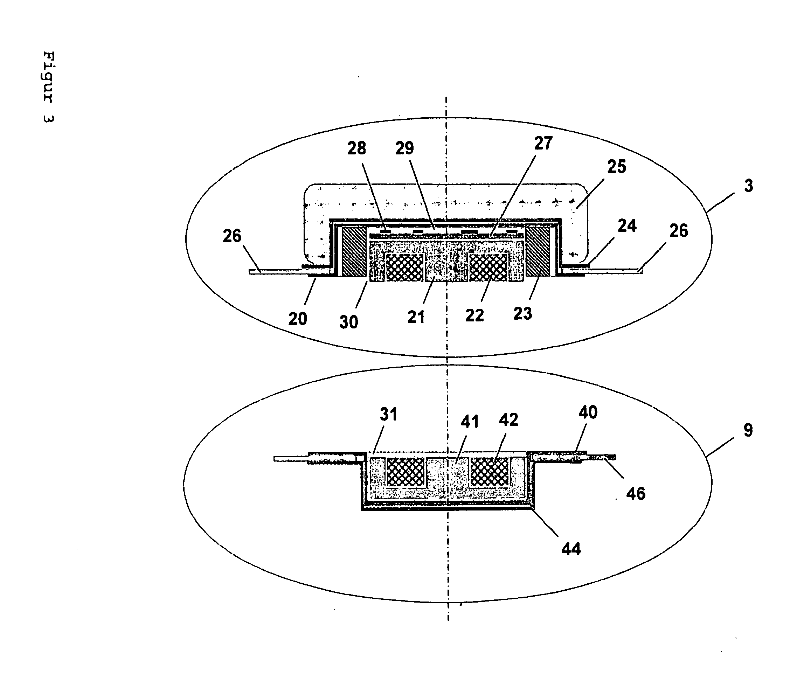

Elektrische Leitungen 5 mit mindestens zwei Adern, welche aus einem an sich bekannten, elektrisch leitfähigen Garn oder einem Folienleiter hergestellt sind, verbinden den elektrischen Energiespeicher, die Leistungssender und den Ladeadapter. Die elektrischen Leitungen sind dabei in den Futterstoff des Bekleidungsstückes eingewebt. Der Aufbau der Leistungssender und des Ladeadapters ist in Fig.3 dargestellt.

Die an der Jacke befestigten Leistungssender 3 dienen der kontaktlosen Energieübertragung auf andere Bekleidungsgegenstände, beispielsweise auf den in Fig. 1 eingezeichneten Handschuh 8. Hierzu ist der Handschuh mit einem entsprechenden Leistungsempfänger 9 ausgerüstet. Je ein Sender und ein Empfänger bilden eine erfindungsgemäße Vorrichtung zum Herstellen und Lösen elektrischer Verbindungen. Durch die Kontaktfreiheit ist ein vollständiger Schutz gegen Nässe und ein weitgehender Schutz vor Verschmutzung gewährleistet.

Fig.2 zeigt einen flächig ausgeführten Lithium-Polymerakkumulator als Energiespeicher. Der Energiespeicher weist zum Einsatz im Innenbereich von Bekleidungsstücken eine wasch- und reinigungsfeste Versiegelung auf. Daneben umfasst der erfindungsgemäße Energiespeicher Anschlussleitungen 10 und 11 und die für die Steuerung und Überwachung erforderliche Elektronik.

Die Elektronik kann Fallweise auch Einrichtungen zum Verpolungsschutz und zum Schutz vor Kurzschluss enthalten.

Fig.3 zeigt eine Beispiel einer Vorrichtung zum Herstellen und Lösen elektrischer Verbindungen welches nicht unter die beanspruchte Erfindangsfällt. Der Sender 3 beinhaltet ein weichmagnetisches Material 21 zur Führung des von der Wicklung 22 erzeugten magnetischen Wechselfeldes. Vorteilhaft ist die zur Erzeugung des anregenden Wechselstroms erforderliche Elektronik 28 auf einem Schaltungsträger 27 direkt in den Sender 3 integriert. Der Sender ist vorteilhaft durch eine Klemmverbindung in einem Loch im Bekleidungsmaterial 26 befestigt. Das Bekleidungsmaterial kann z.B. aus Stoff, Leder oder Kunststoff bestehen. Die Klemmung des Bekleidungsmaterials zwischen den Teilen 20 und 24 kann durch Nieten, Bördeln oder Verkleben der Teile erfolgen. Durch ein Formteil aus Metall oder Kunststoff 25 kann das Aussehen des Senders an individuelle Designwünsche angepasst werden.

Um über die Verbindungsvorrichtung gleichzeitig elektrische Energie und mechanische Kräfte übertragen zu können, realisiert die Ausführungsform nach Fig.3 einen Magnetverschluss. Dazu ist in dem vorteilhaft aus magnetisierbarem Metall gefertigten Becher 20 zusätzlich zu dem weichmagnetischen Material für die elektrische Leistungsübertragung auch vormagnetisiertes Permanentmagnetmaterial 23 eingebracht. Zur Erhöhung der Schließkräfte ist der Becher 20 so gestaltet, dass er für eine effektive Führung des von dem oder den Permanentmagneten erzeugten magnetischen Flusses sorgt.

Die Herstellung des Elementes erfolgt mittels Kunststoff-Spritzgießens. Dadurch werden sowohl die weichmagnetischen als auch die hartmagnetischen Komponenten zusammen mit der erforderlichen Verfüllung 29 oder Umhüllung in einem Arbeitsschritt produziert. Die Ausgestaltung nach Fig.3 verwendet einen vorgefertigten Magnetkern, welcher in das Element mit eingespritzt wird. Dem Fachmann ist jedoch selbstverständlich geläufig, dass auch mit magnetischen Werkstoffen gefüllte Kunststoffe beim Spritzgießen zum Einsatz kommen können.

Ein an den Sender angeformter Überstand 30, welcher in eine entsprechende Vertiefung 31 am Empfänger eingreift, sorgt für eine präzise Zentrierung zwischen dem Sender und dem Empfänger. Auch der Empfänger 9 ist so gestaltet, dass er einfach mittels Nietens, Bördelns oder Klebens an einem Bekleidungsgegenstand 46 befestigt werden kann. Wie der Leistungssender enthält auch der Leistungsempfänger eine von einem weichmagnetischen Material 41 umgebene Wicklung 42. Im zusammengefügten Zustand bilden die beiden Kernhälften 21 und 41 sowie die Wicklungen 22 und 42 einen Transformator. Dieser kann, je nach verwendeter Schaltungstechnik, einen Luftspalt aufweisen.

In einem Beispiel wird ein Sender und ein Empfänger nach Fig. 3 mit einem Knopfdurchmesser von 15 mm eingesetzt. Der Sender wird mit einer Wechselspannung von ca 500 kHz beaufschlagt. Empfängerseitig liegt in diesem Beispiel dann eine Spannung von 2,5 V an. Der entnehmbare Strom beträgt in diesem Fall maximal 2 A. Die erfindungsgemäße Verbindungsvorrichtung überträgt somit eine Leistung von 5 W. Dem Fachmann ist selbstverständlich geläufig, durch Anpassen der Windungszahlen der Sender- und der Empfängerspule die zu Verfügung stehenden Ströme und Spannungen an das verwendete Heizelement anzupassen. Der in diesem Beispiel beschriebene Leistungsempfänger liefert an das Heizelement eine Wechselspannung mit einer Frequenz von etwa 500 kHz.

In einem weiteren Ausführungsbeispiel umfasst der Leistungsempfänger 9 eine Diode und einen Kondensator. Der Leistungssender 3 entspricht der im vorigen Ausführungsbeispiel beschriebenen Ausführung. Ein solchermaßen ausgerüsteter Leistungsempfänger 9 versorgt das Heizelement mit einer gleichgerichteten und geglätteten Versorgungsspannung. Somit können Probleme der elektromagnetischen Verträglichkeit zuverlässig vermieden werden. Die geringe Verlustleistung der zusätzlichen Bauelemente wird in Wärme umgewandelt und steht dem Benutzer ebenfalls als Nutzwärme zur Verfügung.

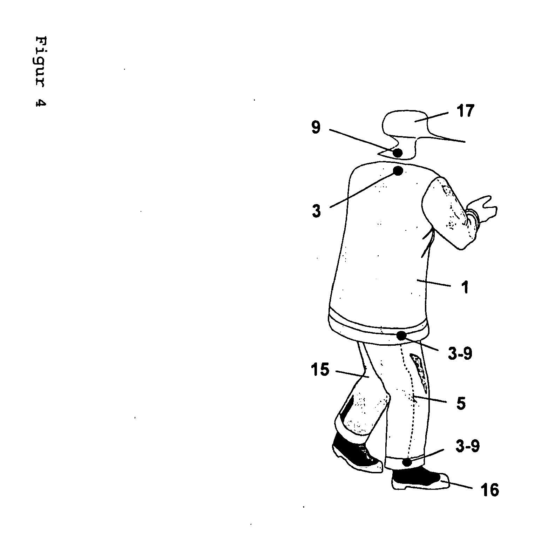

Fig. 4 zeigt eine weitere erfindungsgemäß ausgeführte Bekleidung. Die Jacke 1 ist im Schulterbereich mit einem Leistungssender 3 ausgerüstet, an dem eine mit einem Leistungsempfänger 9 ausgestattete, beheizbare Mütze 17 angekoppelt werden kann.

Ein erfindungsgemäß ausgeführter Bekleidungsgegenstand kann auch zur Weiterleitung elektrischer Energie an andere Bekleidungsgegenstände dienen. Fig. 4 zeigt eine entsprechend ausgestattete Hose 15. Diese besitzt im Bereich des Hosenbundes einen Leistungsempfänger 9, der mit einem entsprechenden Leistungssender 3 an der Jacke 1 gekoppelt werden kann. Die übertragene elektrische Leistung wird über eine oder mehrere elektrische Leitungen 5 an einen oder mehrere Leistungssender 3 an den Hosenbeinen geleitet. Auf diese Weise können mit entsprechenden Leistungsempfängern 9 ausgestattete weitere Bekleidungsgegenstände, z.B. beheizbare Schuhe oder Stiefel 16, mit elektrischer Energie versorgt werden.

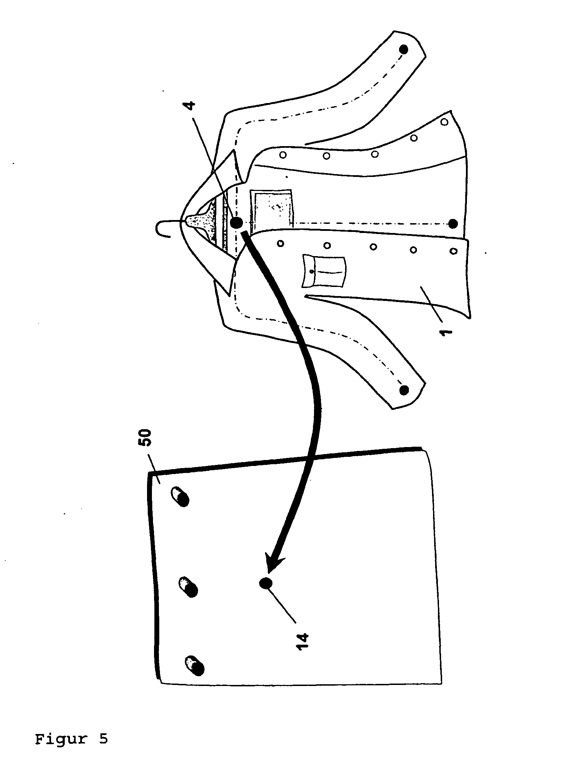

Fig. 5 zeigt eine Lademöglichkeit für eine erfindungsgemäß ausgeführte Bekleidung. Dazu besitzt die Jacke 1 auf der Innen- oder Außenseite einen Ladeadapter 4. Die Garderobe 50 ist mit einem entsprechenden Ladeleistungssender 14 ausgestattet. Der Ladeleistungssender 14 enthält seine Energie z.B. aus dem öffentlichen Stromversorgungsnetz. Ladeleistungssender 14 und Ladeadapter 4 bilden einen erfindungsgemäßen Energiekoppler, der wie in Fig. 3 dargestellt ausgeführt werden kann. Auch der Ladeleistungssender 14 besitzt vorteilhaft eine Lasterkennung und ist damit nur bei angekoppelter Bekleidung aktiv.

Vorteilhaft ist der Ladeleistungssender 14 so angebracht, dass er bei aufgehängter Bekleidung bequem mit dem Ladeadapter 4 nach Art einer Magnet- oder Druckknopf-Verbindung gekoppelt werden kann.

Selbstverständlich ist eine Anbringung des Ladeleistungssenders 14 auch in Fahrzeugsitzen oder Kopfstützen möglich. In einer vorteilhaften Ausführungsform ist der Ladeleistungssender über eine flexible Anschlussleitung mit der Energiequelle (Fahrzeug-Bordnetz, Garderobe, etc.) verbunden. Damit ist eine erhöhte Bewegungsfreiheit bzw. Flexibilität für den Anwender gegeben.

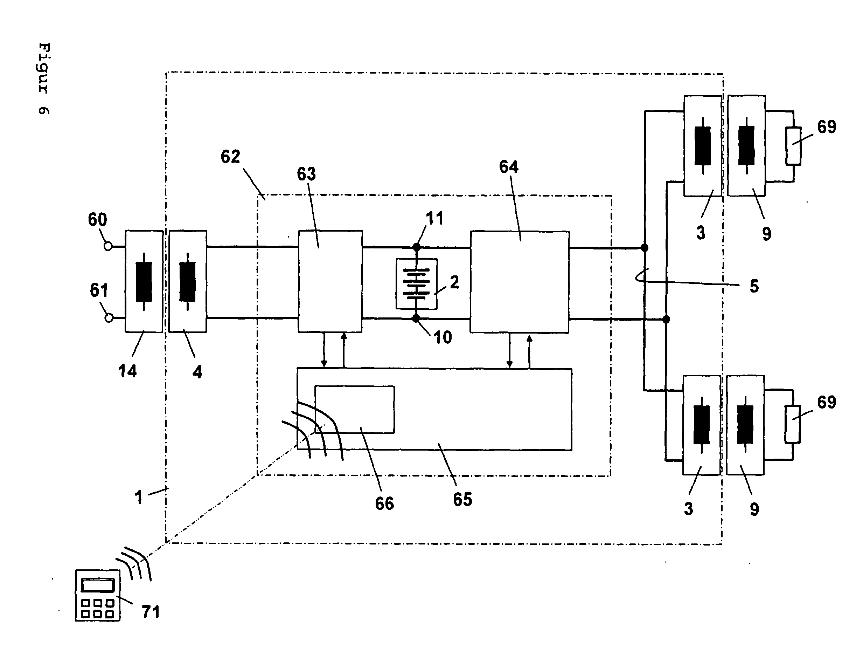

Fig. 6 zeigt ein mögliches Blockschaltbild einer erfindungsgemäßen Bekleidung. Dabei enthält beispielsweise die Jacke 1 die im entsprechend gekennzeichneten Rahmen enthaltenen Elemente. Eine zentrale Elektronikeinheit 62 integriert vorteilhaft den elektrischen Energiespeicher 2, eine Ladeelektronik 63, einen Spannungswandler 64 und einen Steuer- und Regelektronik 65. Letztere beinhaltet in der dargestellten Ausführungsform eine Transponder-Einheit 66, so dass sich die Jacke mittels eines Senders 71 fern bedienen lässt. Das Element 66 kann aber auch eine Folientastatur oder Sensorfläche sein.

Die Zuführung der elektrischen Energie für das Laden und/oder Heizbetrieb erfolgt über den Ladeleistungssender 14 und den Ladeadapter 4. Der Ladeleistungssender kann so ausgelegt werden, dass an den Anschlüssen 60/61 jede gewünschte Versorgungsspannung möglich ist, beispielsweise die Netzwechselspannung (90-230Vac) oder eine Gleichspannung aus einem Fahrzeug-Bordnetz. Die Ladeelektronik 63 stellt die korrekten Ladebedingungen für den elektrischen Energiespeicher 2 sicher, und schützt den Speicher vor Überladung.

Der Block 64 enthält im einfachsten Fall eine elektronische Schaltung, die den Energiespeicher vor Tiefentladung und Kurzschluss (z.B. bei Beschädigung der Bekleidung mit der Folge eines Kurzschlusses auf der Lastzuleitungen 5 schützt. In einer möglichen Ausführungsform enthält Block 64 einen geschalteten Spannungswandler. Damit ergeben sich eine Reihe von Möglichkeiten: Zum einen kann damit eine variable Spannung auf den Lastzuleitungen 5 erzeugt und damit die Heizleistung verändert werden. Die Höhe der Spannung ist über die Steuer- und Regelelektronik 65 vorgebbar. Ein weiterer Vorteil beim Einsatz eines Spannungswandlers ist, dass auf den Lastzuleitungen 5 mit einer Spannung gearbeitet werden kann, die über der Spannung des Energiespeichers liegt. Dies bietet Vorteile bezüglich der Reduzierung der Leitungsverluste beim Einsatz sehr dünner und damit entsprechend hochohmiger Verbindungsleitungen 5 (z.B. leitfähiger Garne).

In einer weiteren vorteilhaften Ausführungsform enthält Block 64 einen Modulator für die Übertragung digitaler Informationen (z.B. eine individuelle oder globale Sollwertvorgabe) an die Leistungssender 3. Die Informationsübertragung kann dabei durch ein der Gleichspannung auf der Leitung 5 überlagertes Signal erfolgen. In bestimmten Fällen kann es aber vorteilhaft sein, auf den Leitungen 5 mit einer Wechselspannung zu arbeiten (z.B. aus Korrosionsgründen). In diesem Fall kann eine Informationsübertragung auch durch Codierung in das Pulsmuster der Wechselspannung erfolgen.

An den "Lastspannungsbus" 5 kann die benötigte Anzahl an Leistungssendern 3 angeschlossen werden. Diese wiederum koppeln über die Leistungsempfänger 9 elektrische Energie auf die Heizelemente 69 in den jeweiligen Bekleidungsgegenständen.

Fig. 6 zeigt nur eine der möglichen Partitionierungen der Elektronik, wobei der elektrische Energiespeicher 2, die Ladeelektronik 63, der Spannungswandler 64 und die Steuer- und Regelelektronik 65 in einer zentralen Elektronikeinheit 62 integriert sind. Selbstverständlich sind auch andere Partitionierungen, z.B. mit abgesetztem Bedien- und Transponderteil 66, möglich.

In einer weiteren möglichen Partitionierung kann die Elektronik auch komplett in den Ladeadapter 4 integriert werden. Mit einem davon getrennt untergebrachten Energiespeicher 2 entspricht diese Partitionierung der in Fig. 1 erkennbaren Anordnung.

### Bezugszeichenliste

| | |
|---|---|
| 1- | Jacke |
| 2- | Elektrischer Energiespeicher |
| 3- | Leistungssender |
| 4- | Ladeadapter |
| 5- | Elektrische Verbindungen |
| 6- | Jackentasche |
| 7- | Innentasche |
| 8- | Handschuh |
| 9- | Leistungsempfänger |
| 10- | Elektronik zur Steuerung und Überwachung |
| 11- | Anschlussleitung |
| 14- | Ladeleistungssender |
| 15- | Hose |
| 16- | Schuh |
| 17- | Mütze |
| 21- | weichmagnetische Kernhälfte |
| 22- | Erregerwicklung |
| 23- | vormagnetisiertes Permanentmagnetmaterial |
| 24- | äußere Befestigungskappe |
| 25- | Dekorkappe |
| 26- | Bekleidungsmaterial |
| 27- | Schaltungsträger |
| 28- | Elektronik |
| 29- | Vergussmasse |
| 30- | Zentrierungsüberstand |
| 31- | Zentrierungsvertiefung |
| 40- | Innenbecher |
| 41- | weichmagnetische Kernhälfte |
| 42- | Empfängerspule |
| 44- | Außenbecher |
| 46- | Bekleidungsmaterial |
| 50- | Garderobe |
| 60- | Versorgungsspannungsanschluss |
| 61- | Versorgungsspannungsanschluss |
| 62- | Zentrale Elektronik |
| 63- | Ladelektronik |
| 64- | Spannungswandler, Kurzschluss- und Tiefentladeschutz |
| 65- | Steuer- und Regelelektronik |
| 66- | Transpondereinheit |
| 69- | Heizelemente |
| 71- | Fernbedienungssender |

## Patentansprüche

1. Bekleidungsstück (1, 8), aufweisend
mindestens zwei Kleidungsstücke (1, 8),
mindestens eine Vorrichtung zum Herstellen und Lösen elektrischer Verbindungen (3, 4, 9), bei welcher eine Übertragung elektrischer Energie zwischen den beiden Kleidungsstücken (1, 8) ermöglicht wird,
mindestens ein elektrischer Energiespeicher (2) in einem der Kleidungsstücke (1) und mindestens ein elektrisch beheizbares Element im anderen Kleidungsstück (8),
elektrische Leitungen (5) zur Verbindung des elektrischen Energiespeichers (2) zu einem Sender (3), und des mindestens einen elektrisch beheizbaren Elements zu einem Empfänger (9), **dadurch gekennzeichnet, dass**
bei der Vorrichtung zum Herstellen und Lösen elektrischer Verbindungen (3, 4, 9) mittels des Senders (3) und des Empfängers (9) elektrische Energie induktiv Übertragen wird und zwischen Sender (3) und Empfänger (9) eine Verriegelungsvorrichtung mit einem Verriegelungselement vorgesehen ist, welches eine mechanische Kraftübertragung in allen Raumrichtungen ermöglicht, wobei das Verriegelungselement mit einem mechanischen Verschlusselement ausgestattet ist, so dass die Schließkraft mechanisch erzeugt wird, nach Art eines Druckknopfes oder eines Klettverschlusses.

2. Bekleidungsstück nach einem der vorhergehenden Ansprüche, **dadurch gekennzeichnet, dass** der elektrische Energiespeicher mit einer wasch- und/oder reinigungsbeständigen Umhüllung versehen ist.

3. Bekleidungsstück nach einem der vorhergehenden Ansprüche, **dadurch gekennzeichnet, dass** eine Steuer- und/oder Regeleinrichtung vorgesehen ist.

4. Bekleidungsstück nach Anspruch 3, **dadurch gekennzeichnet, dass** die Steuer- und/oder Regeleinrichtung in den elektrischen Energiespeicher und/oder in die Vorrichtung zum Herstellen und Lösen elektrischer Verbindungen integriert ist.

5. Bekleidungsstück nach einem der Ansprüche 3 bis 4,
**dadurch gekennzeichnet, dass** die Steuer- und/oder Regeleinrichtung eine Einrichtung zur Erzeugung einer variablen Gleichspannung auf den elektrischen Leitungen (5) umfasst.

6. Bekleidungsstück nach einem der Ansprüche 3 oder 4,
**dadurch gekennzeichnet, dass** dem Leistungsempfänger und/oder dem Leistungssender ein digital codiertes Steuer- und/oder Regelsignal zugeführt wird und dadurch eine individuelle Adressierung einzelner Leistungssender und/oder Leistungsempfänger erlaubt.

7. Bekleidungsstück nach einem der Ansprüche 1 bis 6,
**dadurch gekennzeichnet, dass** der Leistungsempfänger mit einer Einrichtung ausgestattet ist, welche die Rückübertragung eines Steuer- und/oder Regelsignals an den Leistungssender erlaubt.

8. Bekleidungsstück nach einem der Ansprüche 1 bis 7,
**dadurch gekennzeichnet, dass** die Vorrichtung zum Herstellen und Lösen elektrischer Verbindungen (4, 3) dazu verwendbar ist, dem elektrischen Energiespeicher (2) elektrische Energie zu- oder abzuführen.

9. Bekleidungsstück nach einem der vorhergehenden Ansprüche, **dadurch gekennzeichnet, dass** sowohl der Sender als auch der Empfänger eine von einem weichmagnetischen Material (21, 41) umgebene Wicklung (22, 42) enthalten.

10. Bekleidungsstück nach einem der vorhergehenden Ansprüche, **dadurch gekennzeichnet, dass** der Sender und der zugehörige Empfänger eine mechanische Zentrierung aufweisen.

11. Bekleidungsstück nach Anspruch 10, **dadurch gekennzeichnet, dass** die mechanische Zentrierung durch einen Überstand (30) am Sender oder am Empfänger und durch eine daran angepasste Vertiefung (31) am Empfänger oder am Sender gebildet wird.

12. Bekleidungsstück nach einem der vorhergehenden Ansprüche, **dadurch gekennzeichnet, dass** eines der Kleidungsstücke eine Jacke oder einen Handschuh oder einen Schuh oder eine Hose oder eine Mütze umfasst.

## Claims

1. Item of clothing (1, 8), having at least two garments (1, 8), at least one apparatus for setting up and breaking electrical connections (3, 4, 9), in which transfer of electrical energy between the two garments (1, 8) is made possible, at least one electrical energy store (2) in one of the garments (1) and at least one electrically heatable element in the other garment (8), electrical lines (5) for connecting the electrical energy store (2) to a transmitter (3) and for connecting the at least one electrically heatable element to a receiver (9), **characterized in that** the apparatus for setting up and breaking electrical connections (3, 4, 9) involves the use of the transmitter (3) and the receiver (9) to inductively transfer electrical energy, and the transmitter (3) and the receiver (9) have a locking apparatus provided between them which has a locking element which allows a mechanical force transfer in all spatial directions, the locking element being equipped with a mechanical fastening element, with the result that the closing force is produced mechanically, in a manner of a pushbutton or a hook assembly fastener.

2. Item of clothing according to Claim 1, **characterized in that** the electrical energy store is provided with a washing- and/or cleaning-resistant envelope.

3. Item of clothing according to either of the preceding claims, **characterized in that** a control and/or regulatory device is provided.

4. Item of clothing according to Claim 3, **characterized in that** the control and/or regulatory device is integrated in the electrical energy store and/or in the apparatus for setting up and breaking electrical connections.

5. Item of clothing according to either of Claims 3 and 4, **characterized in that** the control and/or regulatory device comprises a device for producing a variable DC voltage on the electrical lines (5).

6. Item of clothing according to either of Claims 3 and 4, **characterized in that** the power receiver and/or the power transmitter is/are supplied with a digitally encoded control and/or regulatory signal and this allows individual addressing of individual power transmitters and/or power receivers.

7. Item of clothing according to one of Claims 1 to 6, **characterized in that** the power receiver is equipped with a device which allows a control and/or regulatory signal to be transmitted back to the power transmitter.

8. Item of clothing according to one of Claims 1 to 7, **characterized in that** the apparatus for setting up and breaking electrical connections (4, 3) can be used to supply or remove electrical energy to/from the electrical energy store (2).

9. Item of clothing according to one of the preceding claims, **characterized in that** both the transmitter and the receiver contain a winding (22, 42) which is surrounded by a soft-magnetic material (21, 41).

10. Item of clothing according to one of the preceding claims, **characterized in that** the transmitter and the associated receiver have mechanical centering.

11. Item of clothing according to Claim 10, **characterized in that** the mechanical centering is formed by a projection (30) on the transmitter or on the receiver and by a depression (31), matched thereto, on the receiver or on the transmitter.

12. Item of clothing according to one of the preceding claims, **characterized in that** one of the garments comprises a jacket or a glove or a shoe or a pair of trousers or a cap.

## Revendications

1. Vêtement (1, 8) comprenant au moins deux pièces de vêtement (1, 8), au moins un dispositif destiné à établir et interrompre des connexions électriques (3, 4, 9) au moyen duquel une transmission d'énergie électrique entre les deux pièces de vêtement (1, 8) est rendue possible, au moins un dispositif de stockage d'énergie électrique (2) dans l'une des pièces de vêtement (1), et au moins un élément pouvant être chauffé électriquement dans l'autre pièce de vêtement (8), des conducteurs électriques (5) destinés à connecter le dispositif de stockage d'énergie électrique (2) à un émetteur (3), et l'au moins un élément pouvant être chauffé électriquement à un récepteur (9), **caractérisé en ce que** de l'énergie électrique est transmise par induction dans le dispositif destiné à établir et à interrompre les connexions électriques (3, 4, 9) au moyen de l'émetteur (3) et du récepteur (9), et il est prévu un dispositif de verrouillage entre l'émetteur (3) et le récepteur (9), comprenant un élément de verrouillage qui permet une transmission de force mécanique dans toutes les directions spatiales, l'élément de verrouillage étant muni d'un élément de fermeture mécanique de manière à ce que la force de fermeture soit générée mécaniquement à la façon d'un bouton-poussoir ou d'un dispositif de fixation velcro.

2. Vêtement selon la revendication 1, **caractérisé en ce que** le dispositif de stockage d'énergie électrique est muni d'une enveloppe résistante au lavage et/ou au nettoyage.

3. Vêtement selon l'une quelconque des revendications précédentes, **caractérisé en ce qu'**il est prévu un dispositif de commande et/ou de régulation.

4. Vêtement selon la revendication 3, **caractérisé en ce que** le dispositif de commande et/ou de régulation est intégré au dispositif de stockage d'énergie électrique et/ou au dispositif destiné à établir et interrompre les connexions électriques.

5. Vêtement selon l'une quelconque des revendications 3 à 4, **caractérisé en ce que** le dispositif de commande et/ou de régulation comprend un dispositif destiné à générer une tension continue variable sur les conducteurs électriques (5).

6. Vêtement selon l'une quelconque des revendications 3 ou 4, **caractérisé en ce qu'**un signal de commande et/ou de régulation codé numériquement est fourni au récepteur d'énergie et/ou à l'émetteur d'énergie et **en ce que** cela permet un adressage individuel d'émetteurs d'énergie et/ou de récepteurs d'énergie individuels.

7. Vêtement selon l'une quelconque des revendications 1 à 6, **caractérisé en ce que** le récepteur d'énergie est muni d'un dispositif permettant le renvoi d'un signal de commande et/ou de régulation à l'émetteur d'énergie.

8. Vêtement selon l'une quelconque des revendications 1 à 7, **caractérisé en ce que** le dispositif destiné à établir et interrompre les connexions électriques (4, 3) est utilisable pour fournir de l'énergie électrique au dispositif de stockage d'énergie électrique (2) ou en recevoir de celui-ci.

9. Vêtement selon l'une quelconque des revendications précédentes, **caractérisé en ce que** l'émetteur et le récepteur comportent tous deux un enroulement (22, 42) entouré d'un matériau magnétique doux (21, 41).

10. Vêtement selon l'une quelconque des revendications précédentes, **caractérisé en ce que** l'émetteur et le récepteur correspondant comprennent un centrage mécanique.

11. Vêtement selon la revendication 10, **caractérisé en ce que** le centrage mécanique est formé par une saillie (30) sur l'émetteur ou sur le récepteur et par un évidement (31) adapté à celle-ci sur le récepteur ou sur l'émetteur.

12. Vêtement selon l'une quelconque des revendications précédentes, **caractérisé en ce que** l'une des pièces de vêtement comprend une veste ou un gant ou une chaussure ou un pantalon ou une casquette.
